(19) Europäisches Patentamt
European Patent Office
Office européen des brevets

(11) **EP 2 543 619 B1**

(12) **EUROPÄISCHE PATENTSCHRIFT**

(45) Veröffentlichungstag und Bekanntmachung des Hinweises auf die Patenterteilung:
**29.04.2015 Patentblatt 2015/18**

(51) Int Cl.:
*B66C 15/00* (2006.01)          *B66C 19/00* (2006.01)
*E04B 1/98* (2006.01)          *F16F 7/10* (2006.01)

(21) Anmeldenummer: **11172699.8**

(22) Anmeldetag: **05.07.2011**

(54) **Schwingungsdämpfersystem**

Vibration damper system

Système d'amortissement des oscillations

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.01.2013 Patentblatt 2013/02**

(73) Patentinhaber: **Siemens Aktiengesellschaft**
**80333 München (DE)**

(72) Erfinder:
• **Ladra, Uwe**
**91056 Erlangen (DE)**
• **Recktenwald, Alois**
**91074 Herzogenaurach (DE)**
• **Schäfers, Elmar, Dr.**
**90763 Fürth (DE)**

(56) Entgegenhaltungen:
**EP-A1- 2 327 651        WO-A1-2008/145122
DE-A1- 19 830 869        JP-A- 61 041 032**

EP 2 543 619 B1

**Beschreibung**

Die vorliegende Erfindung betrifft ein Schwingungsdämpfersystem zur Dämpfung einer Schwingung einer schwingungsfähigen Struktur, beispielsweise eines Krans.

Schlecht gedämpfte Eigenfrequenzen können bei Maschinen dazu führen, dass diese nur mit eingeschränkter Produktivität arbeiten können oder gar keine Bearbeitung möglich ist, da die Maschinen instabil werden.

Bei Containerkränen, die zum Be- und Entladen von Containerschiffen eingesetzt werden, regt beispielsweise die Verfahrbewegung der Laufkatze die Kranstruktur zu einer Schwingung in Laufkatzenfahrtrichtung an. Die Schwingungsamplitude kann in Abhängigkeit von der Bauart und der Größe des Krans bis zu einem Meter betragen. Da die Toleranzen bei der Aufnahme und dem Absetzen von Containern meist nur im Bereich weniger Millimeter liegen, muss der Kranführer stets abwarten, bis die Schwingung der Kranstruktur entsprechend abgeklungen ist. Dieses Warten beim Containerumschlag kostet viel Zeit und verursacht unerwünscht hohe Kosten.

Eine Möglichkeit, die Schwingung einer Kranstruktur zu verringern, besteht darin, das Kranportal steifer auszulegen, was mit hohem Aufwand und Materialeinsatz einhergeht. Darüber hinaus ist eine ausreichende Versteifung der Kranstruktur aufgrund baulicher Muss-Kriterien häufig nicht möglich, da beispielsweise bestimmte Vorgaben an die Spurbreite, die Querschnittsflächen, die Durchfahrtshöhe oder dergleichen erfüllt sein müssen.

Alternativ oder zusätzlich zu einer konstruktiven Versteifung der Kranstruktur ist es bekannt, so genannte passive Schwingungstilger einzusetzen. Derartige Schwingungstilger umfassen normalerweise einen Dämpfer mit Federelementen und weisen als zentrales Wirkelement eine Schwingmasse auf, die nachfolgend als Dämpfermasse bezeichnet wird. Die Dämpfermasse ist dabei derart mit der zu dämpfenden Kranstruktur gekoppelt, dass sie gegenläufig zur Kranstruktur schwingt. Zur Erzielung einer effektiven Tilgerwirkung muss die Masse der Dämpfermasse allerdings sehr hoch sein. Im Einzelfall beträgt die Masse bis zu 60 Tonnen.

Anmelderseitig wurde im Rahmen einer noch nicht offengelegten Patentanmeldung bereits die Verwendung eines aktiven Schwingungsdämpfers für Containerbrücken mit einem einzelnen Brückenträger bzw. Ausleger vorgeschlagen. Hierbei wird ein eine Dämpfermasse bewegender Linearmotor mittig am Brückenträger der Containerbrücke angebracht. Die Schwingung des Krans in Bewegungsrichtung der Laufkatze, die durch die Laufkatzenbewegung angeregt wird und mit dem Linearmotor bzw. der von diesem bewegten Dämpfermasse gedämpft werden soll, wird mit einem Beschleunigungssensor gemessen. Über einen Lagesollwertschätzer wird die Auslenkung des Krans bestimmt, die über einen Regler auf die Geschwindigkeit zurückgeführt wird. Die Reglerparameter ergeben sich aus der gewünschten Dämpfung und der durch den Linearmotor bewegten Dämpfermasse. Durch die Bewegung des Linearmotors wird eine gleich große, der Bewegungsrichtung des Linearmotors entgegen gesetzt gerichtete Kraft in die Kranstruktur eingeleitet, die zur Dämpfung der Kranschwingung genutzt wird. Der Linearmotor kann mit einer schwach angezogenen Lageregelung versehen sein, um das "Weglaufen" zu verhindern. So wird die mittige Stellung des Linearmotors auf seiner Bahn sichergestellt, damit der vorhandene Weg zur Schwingungsdämpfung optimal ausgenutzt werden kann.

Bei Containerbrücken mit einem einzelnen Brückenträger garantiert die mittige Platzierung eines aktiven Schwingungsdämpfers eine Dämpfung der Kranschwingung in Bewegungsrichtung der Laufkatze. Ein Nachteil besteht allerdings darin, dass weitere Schwingungsbewegungen mit dem vorgeschlagenen Schwingungsdämpfer nicht getilgt werden können, wie beispielsweise eine Drehbewegung, die durch seitlich auf den Brückenträger auftreffenden starken Wind angeregt wird. Ein weiterer Nachteil besteht darin, dass der Linearmotor mittig an der zu dämpfenden schwingungsfähigen Struktur angeordnet werden muss, um zu verhindern, dass durch die Bewegung des Linearmotors unerwünschte Drehmomente in die Struktur eingeleitet werden. Bei vielen zu dämpfenden schwingungsfähigen Strukturen ist eine solche mittige Positionierung jedoch nicht möglich, wie beispielsweise bei Containerbrücken, die als Zweiträgerlaufkräne konzipiert sind und somit also über zwei sich parallel zueinander erstreckende Brückenträger verfügen. Wird der Linearmotor außermittig an einem der beiden Brückenträger montiert, so kann zwar eine Schwingungsdämpfung in Bewegungsrichtung der Laufkatze erfolgen. Die Bewegung der Dämpfermasse würde aber zugleich aufgrund der Hebelwirkung eine unerwünschte Drehbewegung der Struktur anregen.

Weitere Schwingungsdämpfersysteme sind in den Druckschriften WO 2008/145122 A1, DE 198 30 869 A1, EP 2 327 651 A1 und JP 61 041032 A offenbart.

Ausgehend von diesem Stand der Technik ist es eine Aufgabe der vorliegenden Erfindung, ein alternatives Schwingungsdämpfersystem zur Dämpfung einer Schwingung einer schwingungsfähigen Struktur zu schaffen, mit dem Schwingungsbewegungen der schwingungsfähigen Struktur in unterschiedlichen Richtungen gedämpft werden können und die insbesondere zur Dämpfung einer Schwingung eines Zweiträgerlaufkrans geeignet sind.

Zur Lösung dieser Aufgabe schafft die vorliegende Erfindung einen Laufkran nach Anspruch 1.

Der wesentliche Vorteil des erfindungsgemäßen Laufkrans besteht darin, dass die Sensoreinrichtung mehrere verschiedene Bewegungskomponenten einer Strukturbewegung relativ zu einem Bezugssystem erfasst, die dann über mehrere über die Regelungseinrichtung angesteuerte Dämpferanordnungen getilgt werden können. So kann beispielsweise sowohl ein linearer Bewegungsanteil als auch ein Drehbewegungsanteil einer Schwingungsbewegung eines mit zwei Brückenträgern ausgestatteten Zweiträgerlaufkrans mithilfe von zwei aktiven Dämpferanordnungen getilgt werden, wobei jede aktive Dämpferanordnung an einem der Brückenträger montiert ist und eine unter Verwendung eines Motors linear bewegbare Dämpfermasse aufweist, wie es nachfolgend unter Bezugnahme auf ein Ausführungsbeispiel noch näher erläutert wird.

Die Dämpfermassen bewegen sich jeweils geführt entlang einer Geraden, wodurch sich ein konstruktiv einfacher Aufbau der Dämpferanordnungen ergibt.

Die Geraden, entlang denen die Dämpfermassen bewegt werden, erstrecken sich bevorzugt parallel zueinander und auf gleicher Höhe der Struktur, wobei der kürzeste Abstand der ersten Geraden zum Strukturschwerpunkt bevorzugt dem kürzesten Abstand der zweiten Geraden zum Strukturschwerpunkt entspricht. Auf diese Weise wird ein symmetrischer Aufbau mit gleichmäßiger Massenverteilung erzielt, wodurch insbesondere die Regelung der Motoren der jeweiligen Dämpferanordnungen vereinfacht wird.

Bei den Motoren handelt es sich vorteilhaft um Linearmotoren, was zu einem besonders einfachen und preiswerten Aufbau führt.

Gemäß einer Ausgestaltung der vorliegenden Erfindung ist die Regelungseinrichtung derart eingerichtet, dass die von der Sensoreinrichtung erfassten Bewegungskomponenten der Strukturbewegung unabhängig voneinander gedämpft werden. Mit anderen Worten sind die Dämpfungsfaktoren für die jeweiligen Bewegungskomponenten unabhängig voneinander einstellbar und können entsprechend auch verschieden sein.

Bei dem Kran handelt es sich um einen Laufkran mit zwei Brückenträgern, wobei an jedem Brückenträger eine aktive Dämpferanordnung derart angeordnet ist, dass die Erstreckungsrichtung jedes Brückenträgers mit der Bewegungsrichtung der zugeordneten Dämpfermasse übereinstimmt.

Ferner schafft die vorliegende Erfindung zur Lösung der eingangs genannten Aufgabe ein Verfahren zur Dämpfung multidirektionaler Schwingungen eines Laufkrans der zuvor beschriebenen Art, bei dem verschiedene lineare und/oder rotative Bewegungskomponenten einer Strukturbewegung relativ zu einem Bezugssystem sensorisch erfasst werden; und bei dem Stellgrößen basierend auf den sensorisch erfassten Bewegungskomponenten unter Verwendung eines Dämpfungsalgorithmus berechnet werden; wobei die Stellgrößen Geschwindigkeitsregelkreisen zur Generierung von Motoransteuersignalen direkt als Sollgrößen zugeführt werden, wenn die Richtungen der sensorisch erfassten Bewegungskomponenten der Strukturbewegung mit den Bewegungsrichtungen der Dämpfermassen des Dämpfersystems übereinstimmen, oder, wenn die Richtungen der sensorisch erfassten Bewegungskomponenten der Strukturbewegung nicht mit den Bewegungsrichtungen der Dämpfermassen des Dämpfersystems übereinstimmen, die Stellgrößen derart transformiert werden, dass den Bewegungsrichtungen der Dämpfermassen entsprechende Sollgrößen generiert werden, die dann den Geschwindigkeitsregelkreisen zur Generierung von Motoransteuersignalen zugeführt werden. Mithilfe der Transformation werden die berechneten Stellgrößen also in die Bewegungsrichtungen der Dämpferanordnungen umgerechnet.

Weitere Merkmale und Vorteile der vorliegenden Erfindung werden anhand der nachfolgenden Beschreibung bevorzugter Ausführungsbeispiele der vorliegenden Erfindung unter Bezugnahme auf die beiliegende Zeichnung deutlich. Darin ist

FIG 1    eine schematische Draufsicht eines Laufkrans mit zwei Brückenträgern, der mit einem Schwingungsdämpfersystem gemäß einer Ausführungsform der vorliegenden Erfindung ausgestattet ist;

Figur 2    eine schematische Ansicht einer Regelstruktur für eine zweidimensionale Schwingungsdämpfung an dem in Figur 1 dargestellten Laufkran; und

Figur 3    eine schematische Struktur einer multidirektionalen Schwingungsdämpfung.

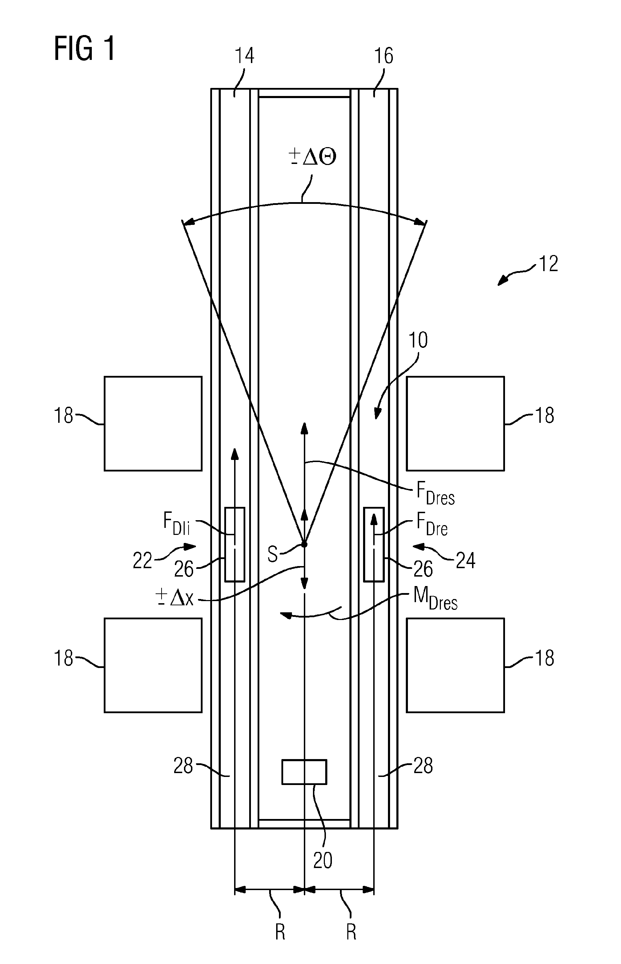

Figur 1 zeigt schematisch ein Schwingungsdämpfersystem 10 gemäß einer Ausführungsform der vorliegenden Erfindung, das zur Dämpfung einer Schwingung einer schwingungsfähigen Struktur dient, bei der es sich vorliegend um einen Laufkran 12 mit zwei sich parallel zueinander erstreckenden Brückenträgern 14 und 16 handelt, die an einem Portal 18 gehalten sind.

Das Schwingungsdämpfersystem umfasst eine Sensoreinrichtung 20, die an dem Portal 18 des Laufkrans 12 montiert ist und nicht näher dargestellte Sensoren aufweist, die zur Erfassung verschiedener Bewegungskomponenten einer Schwingungsbewegung des Laufkrans 12 relativ zu einem Bezugssystem ausgelegt sind. Dabei wird zum einen eine lineare Auslenkung $\pm\Delta x$ des Laufkrans 12 in Bewegungsrichtung der Laufkatze und zum anderen eine rotative Auslenkung $\pm\Delta\theta$ des Laufkrans 12 um den Strukturschwerpunkt S ermittelt. Ferner weist das Schwingungsdämpfersystem zwei baugleich ausgeführte Dämpferanordnungen 22 und 24 auf, wobei die Dämpferanordnung 22 am linken Brückenträger 14 und die Dämpferanordnung 24 am rechten Brückenträger 16 montiert ist. Jede Dämpferanordnung 22, 24 umfasst eine Dämpfermasse 26, die über einen sich entlang des zugeordneten Brückenträgers 14 bzw. 16 erstreckenden Linearmotor 28 linear bewegbar ist. Die Linearmotoren 28 und somit die Bewegungsbahnen der Dämpfermassen 26 sind parallel zueinander und auf gleicher Höhe des Laufkrans 12 angeordnet, wobei der kürzeste Abstand R der durch den ersten Linearmotor 28 definierten Gerade zum Strukturschwerpunkt S dem kürzesten Abstand R der durch den zweiten Linearmotor 28 definierten Gerade zum Strukturschwerpunkt S entspricht. Insgesamt wird auf diese Weise ein hinsichtlich des Strukturschwerpunkts S symmetrischer Aufbau mit nahezu gleichmäßiger Massensverteilung erzielt.

Ziel des Schwingungsdämpfersystems 10 ist es, Schwingungen des Laufkrans 12 zu dämpfen, indem die Dämpfermassen 26 der beiden Dämpferanordnungen 22 und 24 über die diesen zugeordneten Linearmotoren 28 bewegt werden. Das Grundprinzip besteht darin, dass durch die Bewegung jeder der Dämpfermassen 26 eine Kraft entsteht, die aufgrund der Ankopplung der Dämpfermassen 26 an den Laufkran 12 in entgegen gesetzter Richtung als Dämpferkraft $F_{Dli}$ bzw. $F_{Dre}$ dämpfend auf den Laufkran 12 wirkt. Somit ergibt sich eine resultierende Dämpferkraft $F_{Dres}$, die der Summe der beiden Dämpferkräfte $F_{Dli}$ und $F_{Dre}$ entspricht. Es gilt also:

$$F_{Dres} = F_{Dli} + F_{Dre}.$$

Ferner wird ein Dämpfermoment $M_{Dres}$ um den Strukturschwerpunkt S erzeugt, wobei gilt:

$$M_{Dres} = (F_{Dli} - F_{Dre}) \times R.$$

Mit den beiden im Abstand R zum Strukturschwerpunkt angeordneten Linearmotoren 28 ergeben sich also zwei Stellmöglichkeiten, so dass sowohl die ermittelte Auslenkung $\pm\Delta x$ in Bewegungsrichtung der Laufkatze als auch die ermittelte Drehauslenkung $\pm\Delta\theta$ des Auslegers getilgt werden kann.

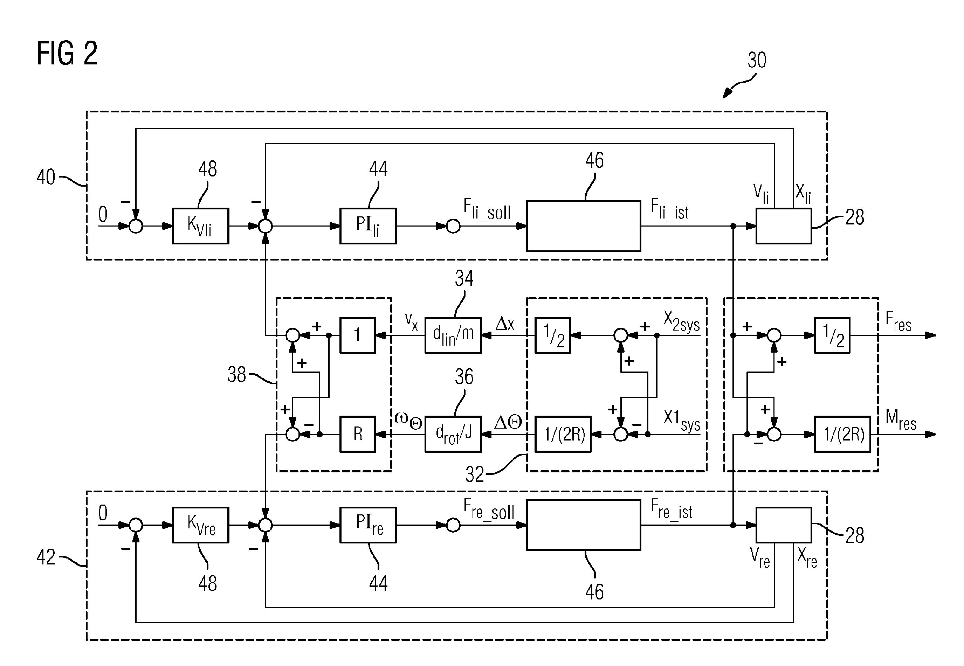

Das Regelungsprinzip für die zweidimensionale Schwingungsdämpfung unter Verwendung des in Figur 1 dargestellten Schwingungsdämpfersystems 10 ist schematisch in Figur 2 anhand einer beispielhaften Regelungseinrichtung 30 gezeigt, deren Messgrößeneingang mit der Sensoreinrichtung 20 und deren Stellgrößenausgang mit den Linearmotoren 28 verbunden ist.

Die Regelungseinrichtung 30 umfasst ein erstes Transformationsglied 32, einen mit dem ersten Transformationsglied 32 verbundenen ersten Skalierer 34, einen mit dem ersten Transformationsglied 32 verbundenen zweiten Skalierer 36, ein mit den beiden Skalierern 34 und 36 verbundenes zweites Transformationsglied 38 und zwei im Wesentlichen baugleiche und mit dem zweiten Transformationsglied 38 verbundene Geschwindigkeitsregelkreise 40 und 42. Jeder Geschwindigkeitsregelkreis 40, 42 beinhaltet einen Geschwindigkeitsregler 44 und einen Stromregelkreis 46, wobei dem Geschwindigkeitsregler 44 ein Lageregler 48 vorgeschaltet ist.

Die Regelungseinrichtung 30 arbeitet prinzipiell wie folgt:

Sowohl die Schwingungsauslenkung $\Delta x$ für die Bewegungsrichtung der Laufkatze als auch die Auslenkung $\Delta\theta$ der Drehbewegung des Laufkrans 12 kann aufgrund der Teilung des Auslegers in die beiden Brückenträger 14 und 16 nicht direkt am Strukturschwerpunkt S erfasst werden. Aus diesem Grund wird die Bewegung des Laufkrans 12 auf beiden Seiten der Brückenträger 14 und 16 mit entsprechenden, nicht näher dargestellten Sensoren in Form der Messgrößen $x_{1sys}$ und $x_{2sys}$ erfasst. Anhand dieser Messgrößen werden dann in dem ersten Transformationsglied 32 Lagesignale in Form der linearen Auslenkung in Bewegungsrichtung der Laufkatze $\Delta x$ und der Drehauslenkung $\Delta\theta$ für den Strukturschwerpunkt S berechnet.

Die die Auslenkungen $\Delta x$ bzw. $\Delta\theta$ repräsentierenden Lagesignale werden in zugeordneten Skalierer 34 und 36 mit einem Gewichtungsfaktor skaliert. Genauer gesagt wird das Lagesignal für $\Delta x$ mit dem Gewichtungsfaktor $d_{lin}/m$ skaliert, wobei $d_{lin}$ der gewünschten linearen Dämpfung und $m$ der Masse der Dämpfermasse $m_{Damp}$ entspricht, und das Lagesignal für $\Delta\theta$ wird mit einem Gewichtungsfaktor $d_{rot}/J$ skaliert, wobei $d_{rot}$ der gewünschten rotativen Dämpfung und J dem Trägheitsmoment der Dämpfermasse $m_{Damp}$ entspricht. Die resultierenden Stellgrößen $v_x$ bzw. $\omega_\theta$ können nicht direkt als Sollgrößen auf die jeweiligen Geschwindigkeitsregelkreise 40 und 42 der Linearmotoren 18 gegeben werden, da diese in anderen Bewegungsrichtungen wirken. Mittels einer inversen Transformations-Matrix werden die Stellgrößen $v_x$ bzw. $\omega_\theta$ der Dämpfungseinrichtungen aus diesem Grund im Transformationsglied 38 in die Sollgrößen der Linearmotor-Bewe- gungsrichtungen $v_{LMli}$ und $v_{LMre}$ umgerechnet.

Diese Sollgrößen werden dann dem Regeleingang des Geschwindigkeitsreglers 44 zugeführt, wobei sie dem Ausgangssignal des entsprechenden Lagereglers 48 aufgeschaltet werden. Dem Lageregler 48 wird als Ist-Wert die Ist-Lage $x_{li}$ bzw. $x_{re}$ des zugeordneten Linearmotors 28 und als Soll-Wert eine Konstante zugeführt. Der Lageregler 48 dient dazu, ein Wegdriften der Dämpfermassen 26 der Linearmotoren 28 zu verhindern.

Dem Geschwindigkeitsregler 44 wird als weiteres Eingangssignal die Ist-Geschwindigkeit $v_{li}$ bzw. $v_{re}$ des zugehörigen Linearmotors 28 mit negativem Vorzeichen zugeführt. Basierend auf diesen Eingangssignalen ermittelt der Geschwindigkeitsregler 44, der beispielsweise als PI-Regler ausgebildet sein kann, dann die Soll-Größe $F_{li\ soll}$ bzw. $F_{re\ soll}$, die dem Stromregelkreis 46 zugeführt wird.

Der Zusammenhang zwischen den Bewegungsrichtungen der Linearmotoren 28 und den Dämpfungsrichtungen ist wie folgt definiert:

$$\overline{x_{damp}} = TM \cdot \overline{x_{LM}}$$

Daraus folgt

$$\overline{x_{LM}} = TM^{-1} \cdot \overline{x_{damp}}$$

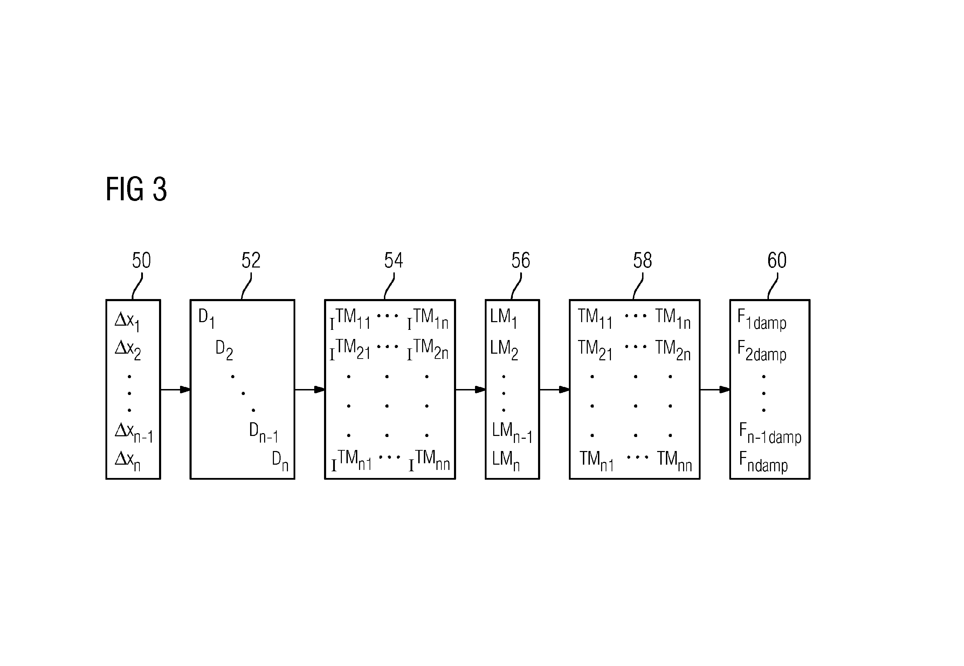

Mit der Transformation im Transformationsglied 38 wird also sichergestellt, dass jeder Linearmotor 28 den für jede Dämpfungsrichtung notwendigen Anteil erhält. Die Summe für jeden Linearmotor 28 stellt somit eine Linearkombination aus den einzelnen Dämpfungsrichtungen dar und ist vergleichbar mit der Modalmatrix bei der Modaltransformation. Die so in die Bewegungsrichtung transformierten Geschwindigkeiten $v_{LM1i}$ und $v_{LMre}$ werden als Sollgrößen auf die Geschwindigkeitsregelkreise 40 und 42 geschaltet. Folglich erzeugen die Linearmotoren 28 die entsprechenden Kräfte, um die Dämpfung der Auslenkungen umzusetzen. Werden die Kräfte der Linearmotoren 28 gedanklich zurück transformiert in die Schwingungsrichtungen des zu dämpfenden Systems, erhält man die für jede Schwingungsrichtung erforderliche Dämpfungskraft. Die allgemeine Struktur für den n-dimensionalen Raum ist in Figur 3 dargestellt. Die n unabhängigen Messgrößen 50 werden in den n Schwingungsrichtungen erfasst. Mit einer Dämpfungsmatrix 52 erfolgt die Parametrierung der gewünschten Dämpfung für die einzelnen Schwingungsrichtungen. Über die inverse Transformationsmatrix 54 erfolgt die Umrechnung in die Bewegungsrichtungen der n voneinander unabhängigen geregelten Linearmotorachsen 56. Die von den Linearmotoren erzeugten Kräfte dämpfen zusammen alle erfassten Auslenkungen. Die dafür erforderlichen Dämpfungskräfte 60 in den n Schwingungsrichtungen erhält man wiederum durch die Umrechnung mit der Transformationsmatrix 58.

Der vorliegend beschriebene Ansatz bezieht sich auf den Fall, dass die auftretenden dynamischen Schwingungen nahezu voneinander entkoppelt sind. Bei signifikanter dynamischer Verkopplung ist das Prinzip ebenso anwendbar. Allerdings sind dann dynamische Transformationsbeziehungen umzusetzen.

Bezogen auf das in Figur 1 dargestellte Beispiel ergibt sich für die Transformation der Bewegung von den Bewegungsrichtungen der Linearmotoren $x_{LM}$ in die Schwingungsrichtungen $x_{sys}$ folgende Beziehung:

$$\overline{x_{Msys}} = \begin{bmatrix} \frac{1}{2} & \frac{1}{2} \\ -\frac{1}{2R} & +\frac{1}{2R} \end{bmatrix} \cdot \overline{x_{LM}}$$

Damit ist die Transformationsmatrix für die Bewegungsaufteilung am Laufkran 12 wie folgt definiert:

$$TM = \frac{1}{2}\begin{bmatrix} 1 & 1 \\ -\frac{1}{R} & +\frac{1}{R} \end{bmatrix} \; ; \; TM^{-1} = \begin{bmatrix} 1 & -R \\ 1 & +R \end{bmatrix}$$

Die Schwingungsbewegung sowohl für die Bewegungsrichtung der Laufkatze $\Delta x$ als auch für die Drehrichtung $\Delta\theta$ des Laufkrans 12 kann aufgrund der Teilung des Auslegers in zwei Brückenträger 14 und 16 nicht direkt im Strukturschwerpunkt S erfasst werden. Deshalb wird die Bewegung des Laufkrans 12 auf beiden Seiten der Brückenträger 14 und 16 mit entsprechenden Sensoren erfasst. Mithilfe der bekannten Transformation errechnet sich im Transformationsglied 32 die lineare Auslenkung in Bewegungsrichtung der Laufkatze $\Delta x$ und die Drehauslenkung $\Delta\theta$ für den Strukturschwerpunkt S wie folgt:

$$\begin{bmatrix} \Delta x \\ \Delta \theta \end{bmatrix} = \frac{1}{2}\begin{bmatrix} 1 & 1 \\ -\frac{1}{R} & +\frac{1}{R} \end{bmatrix} \cdot \begin{bmatrix} x_{1sys} \\ x_{2sys} \end{bmatrix}$$

Für die jetzt vorliegenden Schwingungen im Strukturschwerpunkt S werden die bekannten Algorithmen zur Schwingungsdämpfung angewandt. Die Dämpfung für die lineare Bewegung $d_{lin}$ und die Dämpfung für die Drehbewegung $d_{rot}$ können dabei voneinander unabhängig parametriert werden. Die so erhaltenen Stellgrößen in Schwingungsrichtung werden im Transformationsglied 38 mit der inversen Transformationsmatrix in die Bewegungsrichtung $x_{LMre}$ und $x_{LMli}$ der Linearmotorachsen umgerechnet und als Sollwerte auf die Geschwindigkeitsregelkreise der geregelten Linearmotoren 28 gegeben.

Über den Stromregelkreis 46 der Linearmotoren 28 bauen sich die Beschleunigungskräfte auf, die mit gleichem Betrag aber in entgegen gesetzter Richtung jeweils auf den Laufkran 12 wirken. Die für die beiden Bewegungsrichtungen resultierenden Dämpfungskräfte $F_{Dres}$ und $M_{Dres}$ ergeben sich wiederum über die Transformationsmatrix

$$\begin{bmatrix} F_{res} \\ M_{res} \end{bmatrix} = \frac{1}{2}\begin{bmatrix} 1 & 1 \\ -\frac{1}{R} & +\frac{1}{R} \end{bmatrix} \cdot \begin{bmatrix} F_{re\_ist} \\ F_{li\_ist} \end{bmatrix}$$

**Patentansprüche**

1. Laufkran (12) mit zwei Brückenträgern (14, 16) und einem Schwingungsdämpfersystem (10) zur Dämpfung einer Schwingung des Laufkrans (12), wobei das Schwingungsdämpfersystem (10) aufweist:

   - zumindest eine an dem Laufkran (12) montierte Sensoreinrichtung (20), die zur Erfassung von wenigstens zwei verschiedenen Bewegungskomponenten einer Bewegung des Laufkrans (12) relativ zu einem Bezugsystem ausgelegt ist, wobei es sich bei den Bewegungskomponenten jeweils um eine lineare oder um eine rotative Bewegungskomponente handelt,

- eine an dem ersten Brückenträger (14) angeordnete erste aktive Dämpferanordnung (22), die eine Dämpfermasse und einen an dem Laufkran (12) befestigten Motor (28) aufweist, mit dem die Dämpfermasse entlang einer sich in Erstreckungsrichtung des ersten Brückenträgers (14) erstreckenden ersten Geraden relativ zum Laufkran (12) antreibbar ist,

- eine an dem zweiten Brückenträger (16) angeordnete zweite aktive Dämpferanordnung (24), die eine Dämpfermasse und einen an dem Laufkran (12) befestigten Motor (28) aufweist, mit dem die Dämpfermasse entlang einer sich in Erstreckungsrichtung des zweiten Brückenträgers (16) erstreckenden zweiten Geraden relativ zum Laufkran (12) antreibbar ist, und

- eine Regelungseinrichtung (30), deren Messgrößeneingang mit der Sensoreinrichtung verbunden ist und deren Stellgrößenausgang mit dem Motor (28) der ersten Dämpferanordnung (22) sowie mit dem Motor (28) der zweiten Dämpferanordnung (24) verbunden ist, wobei die Regelungseinrichtung (30) derart eingerichtet ist, dass basierend auf den von der Sensoreinrichtung (20) erfassten Sensorsignalen Ansteuersignale für die Motoren (28) generiert werden, mit denen die Motoren (28) derart ansteuerbar sind, dass die Dämpfermassen die Schwingungsbewegung des Laufkrans (12) kompensierende Bewegungen entlang ihrer Geraden relativ zum Laufkran (12) ausführen.

2. Schwingungsdämpfersystem (10) nach Anspruch 1, **dadurch gekennzeichnet, dass** die Motoren (28) Linearmotoren sind.

3. Laufkran (12) nach einem der vorhergehenden Ansprüche, **dadurch gekennzeichnet, dass** die Regelungseinrichtung (30) derart eingerichtet ist, dass die von der Sensoreinrichtung (20) erfassten Bewegungskomponenten der Strukturbewegung unabhängig voneinander gedämpft werden.

4. Verfahren zur Dämpfung multidirektionaler Schwingungen eines Laufkrans (12) nach einem der vorhergehenden Ansprüche, bei dem verschiedene lineare und/oder rotative Bewegungskomponenten einer Strukturbewegung relativ zu einem Bezugssystem sensorisch erfasst werden; und bei dem Stellgrößen basierend auf den sensorisch erfassten Bewegungskomponenten unter Verwendung eines Dämpfungsalgorithmus berechnet werden, wobei die Stellgrößen Geschwindigkeitsregelkreisen (40, 42) zur Generierung von Motoransteuersignalen direkt als Sollgrößen zugeführt werden, wenn die Richtungen der sensorisch erfassten Bewegungskomponenten der Strukturbewegung mit den Bewegungsrichtungen der Dämpfermassen des Dämpfersystems (10) übereinstimmen,

oder

wenn die Richtungen der sensorisch erfassten Bewegungskomponenten der Strukturbewegung nicht mit den Bewegungsrichtungen der Dämpfermassen des Dämpfersystems (10) übereinstimmen, die Stellgrößen derart transformiert werden, dass den Bewegungsrichtungen der Dämpfermassen entsprechende Sollgrößen generiert werden, die dann den Geschwindigkeitsregelkreisen (40, 42) zur Generierung von Motoransteuersignalen zugeführt werden.

**Claims**

1. Mobile crane (12) with two bridge supports (14, 16) and a vibration damper system (10) for damping a vibration of the mobile crane (12), wherein the vibration damper system (10) has:

- at least one sensor device (20) mounted on the mobile crane (12), which is designed to detect at least two different movement components of a movement of the mobile crane (12) relative to a reference system, wherein the movement components each involve a linear or a rotational movement component,

- a first active damper arrangement (22) disposed on the first bridge support (14), which has a damper mass and a motor (28) fastened to the mobile crane (12) with which the damper mass is able to be driven along a first straight line extending in the direction of extension of the first bridge support (14) relative to the mobile crane (12),

- a second active damper arrangement (24) disposed on the second bridge support (16), which has a damper mass and a motor (28) fastened to the mobile crane (12) with which the damper mass is able to be driven along a second straight line extending in the direction of extension of the second bridge support (16) relative to the mobile crane (12), and

- a regulation device (30), of which the measurement variable input is connected to the sensor device and of which the adjustment variable output is connected to the motor (28) of the first damper arrangement (22) and also to the motor (28) of the second damper arrangement (24), wherein the regulation device (30) is configured such that, based on the sensor signals detected by the sensor device (20), activation signals for the motors (28) will be generated with which the motors (28) can be activated such that the damper masses carry out movements along their straight lines relative to the mobile crane (12) compensating for the vibration movement of the mobile crane (12).

2. Vibration damper system (10) according to claim 1, **characterised in that** the motors (28) are linear motors.

3. Mobile crane (12) according to one of the preceding claims,
c h a r a c t e r i s e d i n that the regulation device (30) is configured such that the movement components of the structure movement detected by the sensor device (20) are damped independently of one another.

4. Method for damping multidirectional vibrations of a mobile crane (12) according to one of the preceding claims, in which the different linear and/or rotational movement components of a structure movement are detected by sensors relative to a reference system; and in which adjustment variables based on the movement components detected by sensors are calculated using a damping algorithm, wherein the adjustment variables are fed to speed regulation circuits (40, 42) for generating motor control signals directly as setpoint variables when the directions of the movement components of the structure movement detected by sensors match the movement directions of the damper masses of the damper system (10),
or
when the directions of the movement components of the structure movement detected by the sensors do not match the movement directions of the damper masses of the damper system (10), the adjustment variables are transformed such that setpoint variables corresponding to the movement directions of the damper masses will be generated which are then fed to the speed regulation circuits (40, 42) for generation of motor activation signals.

**Revendications**

1. Pont roulant (12) ayant deux longerons (14, 16) et un système (10) d'amortissement des oscillations pour l'amortissement d'une oscillation du pont roulant, le système (10) d'amortissement des oscillations ayant :

   - au moins un dispositif (20) capteur, qui est monté sur le pont roulant (12) et qui est conçu pour la détection d'au moins deux composantes différentes d'un mouvement du pont roulant (12) par rapport à un système de référence, les composantes du mouvement étant respectivement une composante de mouvement linéaire ou une composante de mouvement de rotation,

   - un premier agencement (22) actif d'amortisseur, qui est monté sur le premier longeron (14) et qui a une masselotte d'amortisseur et un moteur (28), qui est fixé au pont roulant (12) et par lequel la masselotte d'amortisseur peut être entraînée par rapport au pont roulant (12) suivant une première droite s'étendant dans une direction d'étendue du premier longeron (14),
   - un deuxième agencement (24) actif d'amortisseur, qui est monté sur le deuxième longeron (16) et qui a une masselotte d'amortisseur et un moteur (28), qui est fixé au pont roulant (12) et par lequel la masselotte d'amortisseur peut être entraînée par rapport au pont roulant (12) suivant une deuxième droite s'étendant dans une direction d'étendue du deuxième longeron (16), et

   - un dispositif (30) de régulation, dont l'entrée de grandeurs de mesure est reliée au dispositif capteur et dont la sortie de grandeurs de réglage est reliée au moteur (28) du premier agencement (22) d'amortisseur, ainsi qu'au moteur (28) du deuxième agencement (24) d'amortisseur, le dispositif (30) de régulation étant conçu pour produire, sur la base des signaux de capteur détectés par le dispositif (20) capteur, des signaux de commande des moteurs (28), par lesquels les moteurs (28) peuvent être commandés de manière à ce que les masselottes d'amortisseur exécutent, par rapport au pont roulant (12), le long de leur droite, des mouvements compensant le mouvement d'oscillation du pont roulant (12).

2. Système (10) d'amortissement d'oscillations suivant la revendication 1, **caractérisé en ce que** les moteurs (28) sont des moteurs linéaires.

3. Pont roulant (12) suivant l'une des revendications précédentes, **caractérisé en ce que** le dispositif (30) de régulation est conçu de manière à amortir, indépendamment l'une de l'autre, les composantes de mouvement de structure détectées par le dispositif (20) capteur.

4. Procédé d'amortissement d'oscillations multidirectionnelles d'un pont roulant (12) suivant l'une des revendications précédentes, dans lequel on détecte par capteur des composantes différentes linéaires et/ou de rotation d'un mouvement de structure par rapport à un système de référence ; et dans lequel on calcule, en utilisant un algorithme d'amortissement, des grandeurs de réglage sur la base des composantes du mouvement détectées par capteur, dans lequel on envoie directement, comme grandeurs de consigne, les grandeurs de réglage à des circuits (40, 42) de réglage de la vitesse pour produire des signaux de commande de moteur, si les directions des composantes détectées par capteur du mouvement de structure coïncident avec les directions de mouvement des masselottes d'amortisseur du système (10) d'amortissement,
ou
si les directions des composantes détectées par capteur du mouvement de structure ne coïncident pas avec les directions de mouvement des masselottes d'amortisseur du système (10) d'amortissement, on transforme les grandeurs de réglage de manière à produire des grandeurs de consigne correspondant aux directions de mouvement des masselottes d'amortisseur que l'on envoie alors aux circuits (40, 42) de régulation de la vitesse pour produire des signaux de commande des moteurs.

FIG 1

FIG 2

# FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008145122 A1
- DE 19830869 A1
- EP 2327651 A1
- JP 61041032 A